# EUROPEAN PATENT APPLICATION

(11) **EP 4 624 196 A1**
(43) Date of publication of application: **01.10.2025**
(21) Application number: 24778550.4
(22) Date of filing: 16.01.2024
(51) Int. Cl.: B60B 35/18, B60B 35/16

(54) **WORK VEHICLE**

(30) Priority: 28.03.2023 JP 2023051648
(71) Applicant: Hitachi Construction Machinery Co., Ltd., Tokyo 110-0015 (JP)
(72) Inventor: YAMAMOTO, Hiroki, Tsuchiura-shi, Ibaraki 300-0013 (JP); IWABUCHI, Yuutarou, Tsuchiura-shi, Ibaraki 300-0013 (JP); SATO, Takahiro, Tsuchiura-shi, Ibaraki 300-0013 (JP); KAWADA, Rio, Tsuchiura-shi, Ibaraki 300-0013 (JP); UCHINO, Tetsuro, Tsuchiura-shi, Ibaraki 300-0013 (JP)
(74) Representative: Manitz Finsterwald Patent- und Rechtsanwaltspartnerschaft mbB
(86) International application number: PCT/JP2024/001005
(87) International publication number: WO 2024/202404

(57) **Abstract**

A dump truck (1) includes a cylindrical spindle (12), first and second bearings (16, 17) that are attached to an outer peripheral surface of the spindle (12) to rotatably support a wheel mounting cylinder (18) relative to the spindle (12), a rotation shaft (14) that is provided in an inner peripheral side of the spindle (12) to transmit the rotation of a traveling motor (13) to the wheel mounting cylinder (18), each of first and second temperature sensors (42, 43) that detects a temperature of each of the first and second bearings (16, 17), and a control unit (44) configured to determine abnormality of each of the first and second bearings (16, 17) based upon the temperature detected by each of the first and second temperature sensors (42, 43). The first and second temperature sensors (42, 43) are arranged in the inner peripheral side of the spindle (12).

## Description

### TECHNICAL FIELD

The present invention relates to a working vehicle having wheels, for example, a dump truck.

### BACKGROUND ART

A working vehicle as a dump truck or the like is provided with traveling devices for driving wheels. This traveling device includes a cylindrical spindle that is fixed to a vehicle body, bearings that are attached on an outer peripheral surface of the spindle and rotatably supports a wheel mounting cylinder, on which the wheel is mounted, relative to the spindle, and a rotation shaft that transmits rotation of a power source through a gear reduction mechanism to the wheel mounting cylinder. A large weight acts on the bearings for supporting the wheel from the dump truck loaded with cargo. Therefore, at the working of the dump truck the heat generated by the bearings is detected by a temperature sensor and presence/absence of abnormality of the bearing is detected according to the detected temperature. Based thereupon, it is necessary to inform an operator of the information concerning the abnormality of the bearing.

Here, for example, Patent Document 1 proposes a bearing device provided with a power-generating unit of which a power-generating amount changes depending upon a temperature difference between an inner race and an outer race of each of two bearings for supporting a rotational element, and an abnormality detecting unit that detects abnormality of the bearing based upon the power-generating amount of the power-generating unit. An inner race spacer located between the inner races and an outer race spacer located between the outer races are arranged between the two bearings configuring this bearing device and the power-generating unit abuts on the outer race of the bearing in a state of being attached to the outer race spacer.

### PRIOR ART DOCUMENT

### PATENT DOCUMENT

Patent Document 1: Japanese Patent Laid-Open No. 2021-50814 A

### SUMMARY OF THE INVENTION

However, as similar to the traveling device in the working vehicle, a device of the structure where the bearing is attached on the outer peripheral surface of the spindle has a problem that it is difficult to detect the temperature of the bearing in a state of causing the temperature sensor or the like to abut on the bearing.

An object of the present invention is to provide a working vehicle that can accurately detect the temperature of a bearing without causing a temperature sensor to abut on the bearing.

An aspect of the present invention is applied to a working vehicle comprising: a vehicle body and wheels; a cylindrical spindle that is fixed to the vehicle body; a bearing that is attached on an outer peripheral surface of the spindle and rotatably supports a wheel mounting cylinder, on which the wheel is mounted, relative to the spindle; a rotation shaft that is rotatably provided in an inner peripheral side of the spindle to transmit rotation of a power source through a gear reduction mechanism to the wheel mounting cylinder; a temperature sensor for detecting a temperature of the bearing; and a control unit configured to determine abnormality of the bearing based upon the temperature detected by the temperature sensor, characterized in that the temperature sensor is located in the inner peripheral side of the spindle.

According to the aspect of the present invention, the heat from the bearing attached on the outer peripheral surface of the spindle is transmitted from the outer peripheral surface to the inner peripheral side of the spindle. Because of this configuration, even in a case where the temperature sensor cannot be provided in such a manner as to abut on the bearing, the temperature of the bearing can accurately be detected by the temperature sensor located in the inner peripheral side of the spindle.

### BRIEF DESCRIPTION OF THE DRAWINGS

Fig. 1 is a left side view showing a dump truck to which an embodiment of the present invention is applied.
Fig. 2 is a rear view showing the dump truck, as viewed from the backside.
Fig. 3 is a cross section showing a traveling device on the rear wheel side, as viewed in a direction of arrows III-III in Fig. 1.
Fig. 4 is an enlarged cross section showing a temperature sensor, a spindle, a wheel mounting cylinder, bearings and the like according to a first embodiment.
Fig. 5 is a block diagram showing a connection relationship between the temperature sensor, a control unit and a display monitor.
Fig. 6 is a schematic diagram of the display monitor for displaying the abnormality information of the bearing.
Fig. 7 is a flow chart showing control processing to be executed by the control unit in relation to the abnormality detection of the bearing according to the first embodiment.
Fig. 8 is a characteristic line showing a temperature difference between the temperature detected by a first temperature sensor and the temperature detected by a second temperature sensor.
Fig. 9 is a flow chart showing control processing to be executed by a control unit in relation to the abnormality detection of a bearing according to a second embodiment.
Fig. 10 is an enlarged cross section showing a temperature sensor, a spindle, a wheel mounting cylinder, bearings and the like according to a third embodiment in a position as similar to that in Fig. 3.
Fig. 11 is a block diagram showing a connection relationship between the temperature sensor, a control unit and a display monitor according to the third embodiment.
Fig. 12 is a characteristic line showing a temperature difference between an average temperature of the temperatures detected by the first, second and third temperature sensors and the temperature detected by a forth temperature sensor.
Fig. 13 is a flow chart showing control processing to be executed by the control unit in relation to the abnormality detection of the bearing according to the third embodiment.

### MODE FOR CARRYING OUT THE INVENTION

Hereinafter, a working vehicle according to an embodiment of the present invention will be in detail explained with reference to the accompanying drawings by taking a case of being applied to a dump truck of a rear wheel drive system as an example. It should be noted that the embodiment will be explained by defining a traveling direction of the dump truck as a front-rear direction and a direction perpendicular to the traveling direction as a left-right direction.

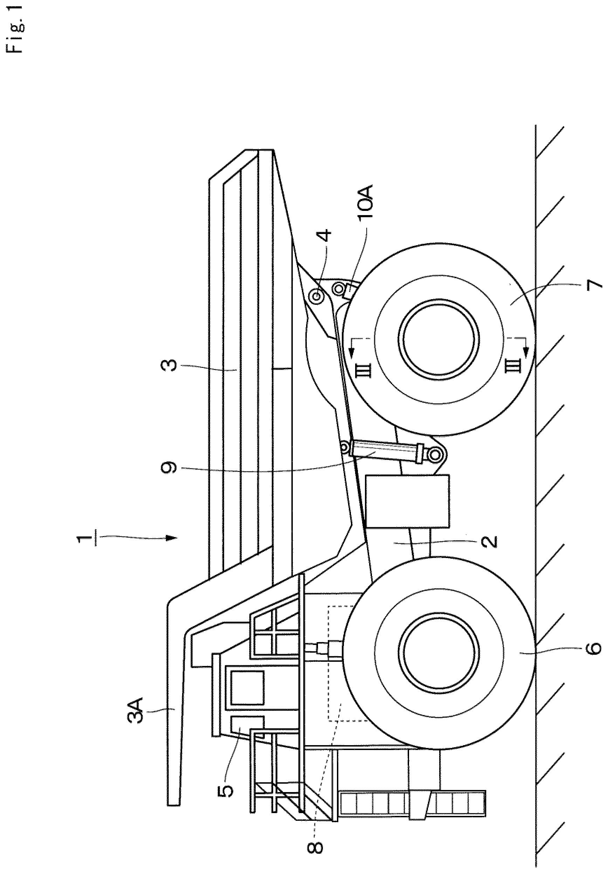

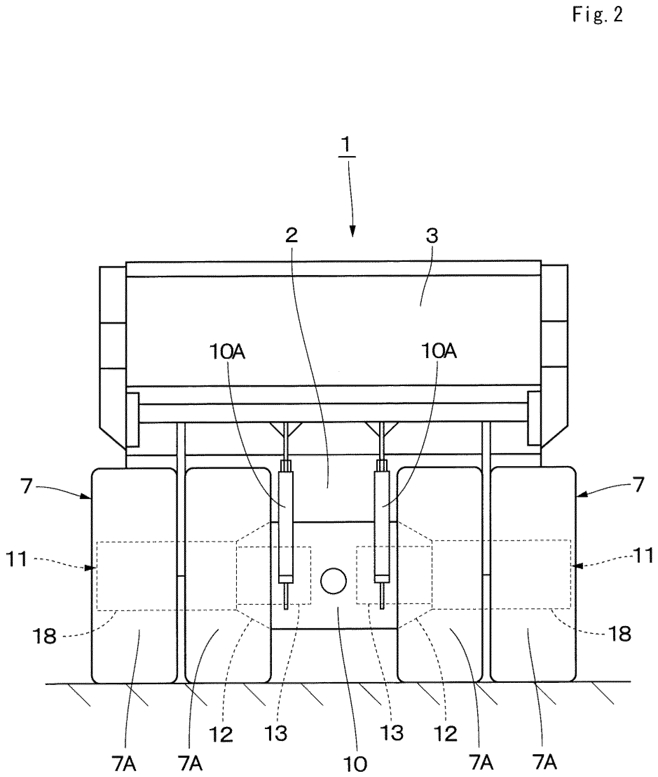

Fig. 1 to Fig. 7 show a first embodiment of the present invention. In Fig. 1, a dump truck 1 includes a vehicle body 2 having a strong frame structure, a vessel (loading platform) 3 mounted on the vehicle body 2 to be capable of lifting and tilting, a cab 5 provided in the front part of the vehicle body 2, and left and right front wheels 6 and left and right rear wheels 7 as wheels.

The vessel 3 is formed as a large-sized container for loading heavy cargo such as crushed stones. A rear-side bottom part of the vessel 3 is coupled to a rear end side of the vehicle body 2 through a coupling pin 4 and the like to be capable of lifting and tilting (inclination-rotating). In addition, a protector 3A is integrally provided on a front-side upper part of the vessel 3 in such a manner as to cover the cab 5 from the upper side. The cab 5 is provided in the front part of the vehicle body 2 to be positioned under the protector 3A. The cab 5 forms an operator's room. An operator's seat, a startup switch, an accelerator pedal, a brake pedal, operational equipment composed of a handle for steering, control levers (none of them are shown) and the like, an after-mentioned display monitor 48 and the like are arranged inside the cab 5.

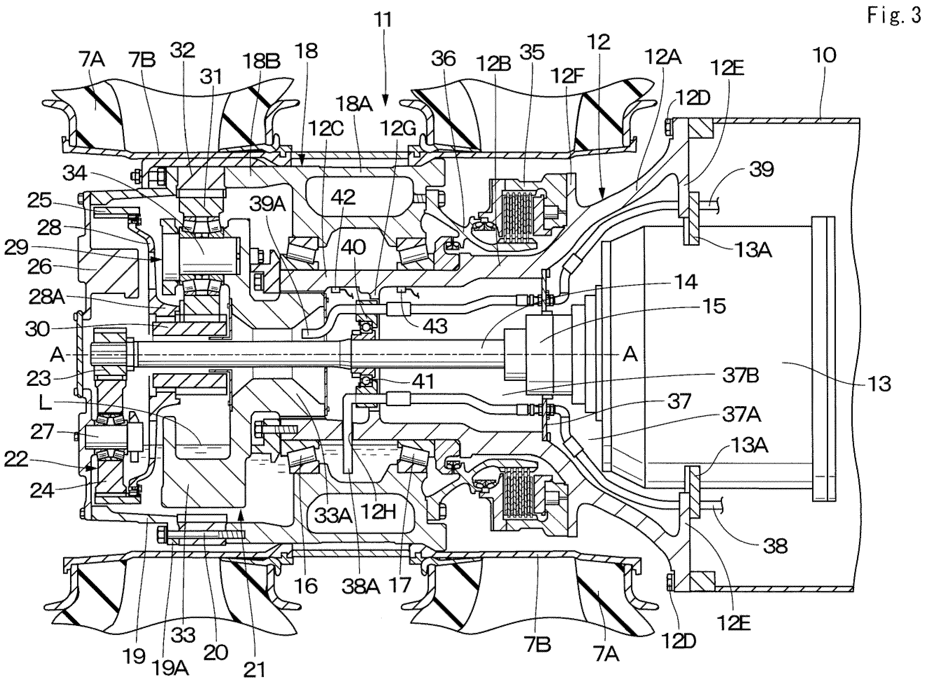

The left and right front wheels 6 are rotatably arranged on the front side of the vehicle body 2 (the left front wheel only is shown). The left and right front wheels 6 form steered wheels that are steered by an operator. The left and right rear wheels 7 are rotatably arranged on the rear side of the vehicle body 2. The left and right rear wheels 7 form drive wheels of the dump truck 1 and the rear wheel 7 is driven and rotated integrally with a wheel mounting cylinder 18 by a traveling device 11 as shown in Fig. 3. The rear wheel 7 includes two rows of tires 7A composed of dual tires and a rim 7B located in a radial inside of the tire 7A.

An engine 8 is positioned under the cab 5 to be provided within the vehicle body 2. The engine 8 is configured by, for example, a diesel engine or the like, and drives a power generator and a hydraulic pump (neither of them is shown) for rotation, which are mounted on the vehicle body 2. Pressurized oil delivered from the hydraulic pump is supplied to hoist cylinders 9, a steering cylinder for power steering (not shown) and the like.

The hoist cylinders 9 are arranged between the vehicle body 2 and the vessel 3. The hoist cylinders 9 are positioned between the front wheel 6 and the rear wheel 7 to be arranged in both left and right sides of the vehicle body 2. Each of the hoist cylinders 9 expands/contracts in the upper-lower direction by delivery/suction of the pressurized oil from/to the hydraulic pump to lift and tilt (inclination-rotate) the vessel 3 around the coupling pin 4.

An axle housing 10 in the rear wheel side is provided in the rear side of the vehicle body 2. The axle housing 10 is formed as a hollow cylindrical body that extends in the left-right direction (axially). The axle housing 10 is attached through left and right rear-wheel side suspensions 10A to the rear side of the vehicle body 2. The traveling devices 11 for driving the left and right rear wheels 7 are arranged in both left and right sides of the axle housing 10 respectively.

The traveling device 11 is provided in each of both left and right sides of the axle housing 10. As shown in Fig. 3, the traveling device 11 includes a spindle 12, a traveling motor 13, a rotation shaft 14, a first bearing 16 and a second bearing 17, the wheel mounting cylinder 18, a gear reduction mechanism 21, a first temperature sensor 42 and a second temperature sensor 43. The traveling device 11 decelerates rotation of the rotation shaft 14 by the gear reduction mechanism 21 and drives the left and right rear wheels 7 as drive wheels by a large rotational torque for rotation.

The spindle 12 is attached in each of both left and right sides of the axle housing 10. The spindle 12 is formed in a stepped cylindrical shape to extend in the left-right direction and includes a tapered part 12A, an intermediate cylindrical part 12B and a small-diameter cylindrical part 12C. The tapered part 12A is formed in a tapered shape to gradually reduce in diameter from an axial one side (axle housing 10-side) toward an axial other side of the spindle 12 and is attached to an end part of the axle housing 10 by using a plurality of bolts 12D. The intermediate cylindrical part 12B is formed integrally with a diameter-reduced side of the tapered part 12A to axially extend. The small-diameter cylindrical part 12C has an outer diameter dimension smaller than the intermediate cylindrical part 12B and is formed integrally with a tip end side of the intermediate cylindrical part 12B.

A plurality of motor attaching seatings 12E projecting to a radial inside are arranged on an axial one side of the tapered part 12A and the traveling motor 13 is attached to the motor attaching seatings 12E. An annular flange part 12F projecting to a radial outside is provided in an outer peripheral side of the tapered part 12A and an after-mentioned wet type brake 35 is attached to the flange part 12F.

A tip end of the small-diameter cylindrical part 12C is formed as an open end, and a cylindrical projection part 33A of an after-mentioned second-stage carrier 33 is spline-coupled to an inner peripheral side of the small-diameter cylindrical part 12C. An annular inner-side projection part 12G projecting to a radial inside is formed in an inner peripheral side of an axial intermediate part of the small-diameter cylindrical part 12C and an after-mentioned retainer 40 is attached to the inner-side projection part 12G. A radial hole 12H is drilled on the lower side of the small-diameter cylindrical part 12C to penetrate therethrough in the upper-lower direction (in a radial direction of the small-diameter cylindrical part 12C), and a tip end 38A of an after-mentioned suction pipe 38 is inserted in the radial hole 12H.

The traveling motor 13 as a drive source is located in the axle housing 10 and in the tapered part 12A of the spindle 12. A plurality of attachment flanges 13A are arranged in an outer peripheral side of the traveling motor 13, and the attachment flanges 13A are attached to the motor attaching seatings 12E of the spindle 12 (tapered part 12A) by using bolts or the like. The traveling motor 13 is configured with an electric motor and drives and rotates the rotation shaft 14 by supply of electric power from the power generator (not shown) mounted on the vehicle body **2.**

The rotation shaft 14 is provided in an inner peripheral side of the spindle 12 to axially extend therein. The rotation shaft 14 is formed by a single long bar-shaped body. One end side of the rotation shaft 14 is jointed via a coupling 15 to an output shaft (not shown) of the traveling motor 13 and is driven and rotated by the traveling motor 13. The other end side of the rotation shaft 14 projects from the open end of the small-diameter cylindrical part 12C of the spindle 12. An after-mentioned sun gear 23 is attached to the other end (projection end) of the rotation shaft 14. The axial intermediate part of the rotation shaft 14 is rotatably supported relative to the spindle 12 by an after-mentioned third bearing 41.

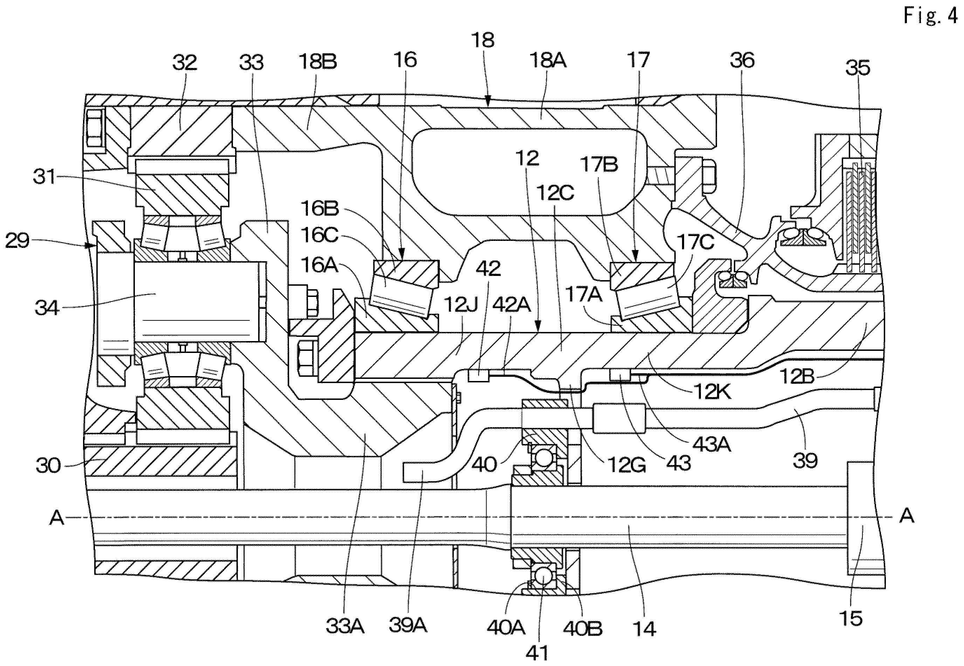

A first bearing 16 and a second bearing 17 are attached to the outer peripheral surface of the small-diameter cylindrical part 12C configuring part of the spindle 12 to be spaced therebetween by an axial interval. The first and second bearings 16, 17 rotatably support the wheel mounting cylinder 18 relative to the spindle 12. As shown in Fig. 4, the first bearing 16 includes an inner race 16A engaged to the outer peripheral surface of the small-diameter cylindrical part 12C, an outer race 16B engaged to the inner peripheral surface of the wheel mounting cylinder 18 (hollow cylindrical part 18A) and a rolling element 16C provided between the inner race 16A and the outer race 16B. Similarly, the second bearing 17 also includes an inner race 17A engaged to the outer peripheral surface of the small-diameter cylindrical part 12C, an outer race 17B engaged to the inner peripheral surface of the wheel mounting cylinder 18 and a rolling element 17C provided between the inner race 17A and the outer race 17B.

The wheel mounting cylinder 18 is rotatably attached via the first and second bearings 16, 17 in the outer peripheral side of the small-diameter cylindrical part 12C configuring part of the spindle 12. The wheel mounting cylinder 18 includes the hollow cylindrical part 18A supported by the first and second bearings 16, 17 and an extension cylindrical part 18B that projects axially from a tip end of the hollow cylindrical part 18A. The hollow cylindrical part 18A axially extends in the outer peripheral side of the small-diameter cylindrical part 12C and the extension cylindrical part 18B extends in a direction away from the spindle 12. The cylindrical rim 7B configuring part of the rear wheel 7 is removably attached to the outer peripheral side of the wheel mounting cylinder 18, and the rear wheel 7 rotates integrally with the wheel mounting cylinder 18. An internal gear 32 and an outer drum 19, which will be mentioned hereinafter, are fixed integrally to an end part of the extension cylindrical part 18B of the wheel mounting cylinder 18 by using elongated bolts 20. The outer drum 19 is composed of a cylindrical body, and an annular flange part 19A is provided in an axial one side of the outer drum 19. The flange part 19A is fixed via the internal gear 32 to the wheel mounting cylinder 18. An axial other side of the outer drum 19 is formed as an open end.

The gear reduction mechanism 21 is provided between the rotation shaft 14 and the wheel mounting cylinder 18. The gear reduction device 21 is configured by a first-stage planetary gear reduction mechanism 22 and a second-stage planetary gear reduction mechanism 29. The gear reduction mechanism 21 decelerates the rotation of the rotation shaft 14 by two stages, which is transmitted to the wheel mounting cylinder 18.

The first-stage planetary gear reduction mechanism 22 includes the sun gear 23, a plurality of planetary gears 24 and a carrier 26. The sun gear 23 is spline-coupled to a tip end of the rotation shaft 14 projecting from the spindle 12 (small-diameter cylindrical part 12C). The plurality of planetary gears 24 are engaged to the sun gear 23 and a ring-shaped internal gear 25 and rotate on its axis and revolve around the sun gear 23. The carrier 26 is fixed on an open end of the outer drum 19 integral with the wheel mounting cylinder 18 by bolts or the like and rotatably supports the plurality of planetary gears 24 through support pins 27.

Here, the internal gear 25 is formed by using a ring gear to surround the sun gear 23 and the plurality of planetary gears 24 from a radial outside. The internal gear 25 is relatively rotatably located through a radial gap to an inner peripheral surface of the outer drum 19. The rotation of the internal gear 25 is transmitted through a coupling 28 to the second-stage planetary gear reduction mechanism 29.

The coupling 28 is provided between the first-stage planetary gear reduction mechanism 22 and the second-stage planetary gear reduction mechanism 29. The coupling 28 is formed in a disc shape with a boss 28A in the center part. An outer peripheral side of the coupling 28 is spline-coupled to the first-stage internal gear 25. An inner peripheral side of the boss 28A in the coupling 28 is spline-coupled to an after-mentioned second-stage sun gear 30. The coupling 28 transmits rotation of the first-stage internal gear 25 to the second-stage sun gear 30 to cause the sun gear 30 to rotate integrally with the first-stage internal gear 25.

As the sun gear 23 is rotated integrally with the rotation shaft 14 by the traveling motor 13, the first-stage planetary gear reduction mechanism 22 converts the rotation of the sun gear 23 into a rotating movement of the plurality of planetary gears 24 on its axis and a revolving movement thereof. Further, the rotating movement on its axis of the planetary gears 24 is transmitted to the internal gear 25 as the decelerated rotation and the rotation of the internal gear 25 is transmitted through the coupling 28 to the second-stage planetary gear reduction mechanism 29. On the other hand, the revolving movement of the planetary gears 24 is transmitted via the outer drum 19 to the wheel mounting cylinder 18 as rotation of the carrier 26. At this time, since the wheel mounting cylinder 18 rotates integrally with the second-stage internal gear 32, the revolving movement of the planetary gears 24 is controlled to the rotation synchronized with the wheel mounting cylinder 18.

The second-stage planetary gear reduction mechanism 29 includes the cylindrical sun gear 30, a plurality of planetary gears 31, and the carrier 33. The sun gear 30 is spline-coupled to an inner peripheral side of the boss 28A in the coupling 28 and rotates integrally with the coupling 28. The plurality of planetary gears 31 are engaged to the sun gear 30 and the ring-shaped internal gear 32 to rotate on its axis and revolve around the sun gear 30. The carrier 33 rotatably supports the planetary gears 31 through support pins 34. A cylindrical projection part 33A in a cylindrical shape is provided in the center part of the carrier 33 and an outer peripheral side of the cylindrical projection part 33A is spline-coupled to the inner peripheral side of the small-diameter cylindrical part 12C. Here, the second-stage internal gear 32 is formed by using a ring gear surrounding the sun gear 30, the plurality of planetary gears 31, and the like from a radial outside. The internal gear 32 is fixed integrally between the extension cylindrical part 18B in the wheel mounting cylinder 18 and the outer drum 19 by using the elongated bolts 20.

In the second-stage planetary gear reduction mechanism 29, when the cylindrical projection part 33A of the carrier 33 is spline-coupled to the small-diameter cylindrical part 12C of the spindle 12, the revolving movement of the planetary gear 31 (rotation of the carrier 33) is restrained. Therefore, when the sun gear 30 rotates integrally with the coupling 28, the second-stage planetary gear reduction mechanism 29 converts the rotation of the sun gear 30 into a rotating movement of the planetary gear 31 and transmits the rotating movement of the planetary gear 31 to the second-stage internal gear 32. With this configuration, the internal gear 32 decelerates and rotates, and rotational torque of large output decelerated by two stages in the first-stage planetary gear reduction mechanism 22 and in the second-stage planetary gear reduction mechanism 29 is transmitted to the wheel mounting cylinder 18 to which the internal gear 32 is fixed.

Here, lubricating oil L is stored in the inner peripheral side of the wheel mounting cylinder 18, and a liquid surface of the lubricating oil L is in a position lower than an axis center A-A of the rotation shaft 14, specifically in a position lower than the lowest part of the small-diameter cylindrical part 12C configuring part of the spindle 12. Therefore, the lower section of the first and second bearings 16, 17 is immersed in the lubricating oil L and part of the planetary gear reduction mechanisms 22, 29 is always lubricated by the lubricating oil L. In addition, the lubricating oil L splashed by the planetary gear reduction mechanisms 22, 29 scatters in a mist shape in the spindle 12, which is supplied also to the third bearing 41 supporting the rotation shaft 14. As a result, at the operating of the traveling device 11, the resistance against the stirring of the lubricating oil L can be made small to suppress the energy loss and heat generation of the traveling device 11.

The wet brake 35 is attached to the flange part 12F of the spindle 12. The wet brake 35 is configured of a wet multi-plate type of hydraulic brake and applies braking forces to a brake hub 36 attached to the wheel mounting cylinder 18. With this configuration, braking forces are applied to the rotation of the wheel mounting cylinder 18, that is, the rotation of the rear wheel 7.

A partition wall 37 is provided within the spindle 12. The partition wall 37 is formed by an annual plate body. An outer peripheral side of the partition wall 37 is attached to a boundary part between the tapered part 12A and the intermediate cylindrical part 12B of the spindle 12 by using bolts or the like. The partition wall 37 partitions the inside of the spindle 12 into a motor accommodating space part 37A accommodating the traveling motor 13 and a cylindrical space part 37B communicating with the inside of the wheel mounting cylinder 18.

The suction pipe 38 is located within the spindle 12 and the axle housing 10. A longitudinal one side of the suction pipe 38 is connected to a suction side of a lubricating pump (not shown) . A longitudinal other side of the suction pipe 38 is positioned under the rotation shaft 14 to axially extend within the spindle 12 and be retained by the retainer 40. A tip end 38A of the suction pipe 38 projecting from the retainer 40 is immersed in the lubricating oil L inside the wheel mounting cylinder 18 through the radial hole 12H of the spindle 12 and the lubricating oil pump sucks up the lubricating oil L through the suction pipe 38.

The supply pipe 39 is located within the spindle 12 and the axle housing 10 and forms a circulation circuit of the lubricating oil L together with the suction pipe 38, the lubricating oil pump and the like. A longitudinal one side of the supply pipe 39 is connected to an outlet side of the lubricating oil pump. A longitudinal other side of the supply pipe 39 is positioned above the rotation shaft 14 to axially extend within the spindle 12 and be retained by the retainer 40. A tip end 39A of the supply pipe 39 projecting from the retainer 40 extends into the cylindrical projection part 33A of the second-stage carrier 33. The lubricating oil L delivered from the lubricating oil pump is supplied from the tip end 39A of the supply pipe 39 to the rotation shaft 14 to cool the rotation shaft 14 and scatter from the rotation shaft 14, whereby the third bearing 41 and the like are lubricated.

The retainer 40 as a bearing attachment member is attached to the inside projecting part 12G of the spindle 12 (small-diameter cylindrical part 12C) by using bolts or the like. The retainer 40 is composed of a disc at a center part of which a bearing fitting hole 40A is formed to retain the third bearing 41 fitted in the bearing fitting hole 40A and retain the suction pipe 38 and the supply pipe 39. An annular collar part 40B is provided on an axial one side surface of the retainer 40 in the traveling motor 13-side to extend from an inner peripheral surface to a radial inside of the bearing fitting hole 40A. An outer race of the third bearing 41 is fitted in the bearing fitting hole 40A of the retainer 40 and the rotation shaft 14 is fitted in an inner race of the third bearing 41. In this way, the third bearing 41 is located via the retainer 40 in the inner peripheral side of the spindle 12 to rotatably support the rotation shaft 14 relative to the spindle 12.

A first temperature sensor 42 and a second temperature sensor 43 are respectively arranged in the inner peripheral side of the spindle 12. The first temperature sensor 42 is attached to the inner peripheral surface, which corresponds to an attachment section 12J to the first bearing 16, of the small-diameter cylindrical part 12C of the spindle 12 to detect a temperature of the first bearing 16. The second temperature sensor 43 is attached to the inner peripheral surface, which corresponds to an attachment section 12K to the second bearing 17, of the small-diameter cylindrical part 12C of the spindle 12 to detect a temperature of the second bearing 17. The first and second temperature sensors 42, 43 both are arranged closer to the upper side than the axis center A-A of the rotation shaft 14 to be not subject to the lubricating oil L. A cable 42A connected to the first temperature sensor 42 and a cable 43A connected to the second temperature sensor 43 are led through the inner peripheral side of the spindle 12 to the outside of the axle housing 10 to be connected to an input side to a control unit 44.

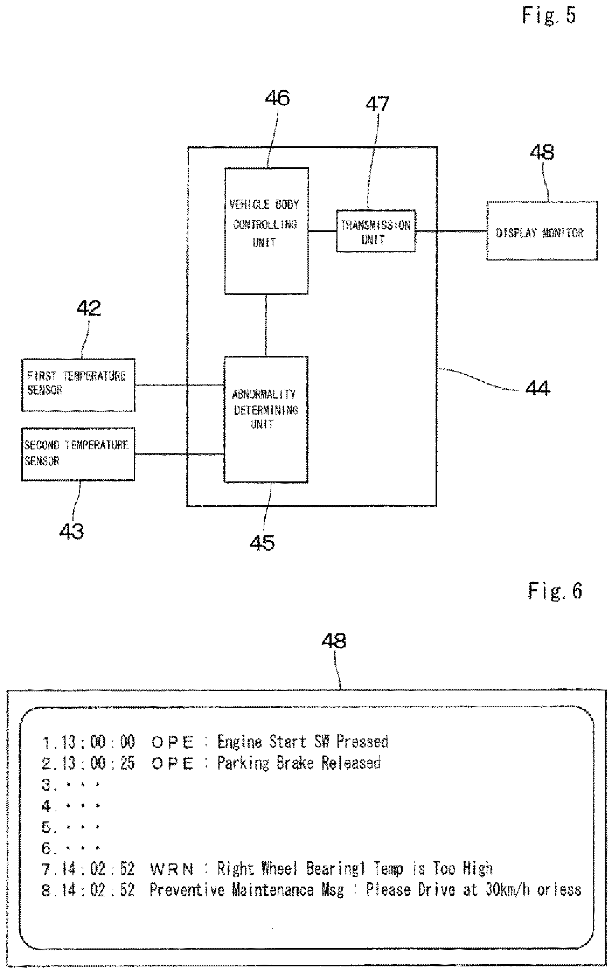

The control unit 44 is mounted on the vehicle body 2 to control the movement of the dump truck 1 in response to an operation of operation equipment devices provided in the cab 5. In addition, the control unit 44 determines whether or not abnormality occurs in each of the first and second bearings 16, 17 based upon a temperature of the first bearing 16 detected by the first temperature sensor 42 and a temperature of the second bearing 17 detected by the second temperature sensor 43. As shown in Fig. 5, the control unit 44 includes an abnormality determining unit 45, a vehicle body controlling unit 46 and a transmission unit 47, wherein the first temperature sensor 42 and the second temperature sensor 43 are connected to the abnormality determining unit 45.

The abnormality determining unit 45 monitors whether or not at least one of the temperature of the first bearing 16 detected by the first temperature sensor 42 and the temperature of the second bearing 17 detected by the second temperature sensor 43 exceeds a preset threshold value. In a case where the temperature of at least one of the first and second bearings 16, 17 exceeds the threshold value, the abnormality determining unit 45 outputs an abnormality detection signal indicating this case to the vehicle body controlling unit 46. The vehicle body controlling unit 46 to which the abnormality detection signal is input transmits abnormality information via the transmission unit 47 to a display monitor 48 located in the cab 5. Because of this, the display monitor 48 performs abnormality display corresponding to a case where the temperature of at least the one of the first and second bearings 16, 17 exceeds the threshold value (refer to Fig. 6). An operator that steers the dump truck 1 in the cab 5 lowers, for example, a traveling speed based upon the abnormality information displayed on the display monitor 48, making it possible to suppress a temperature rise of the first and second bearings 16, 17.

The dump truck 1 according to the present embodiment has the configuration as described above. When an operator starts up the engine 8 by the startup switch located in the cab 5, the hydraulic pump is driven and rotated, and electric power is generated by the power generator (neither thereof are shown). At the time the dump truck 1 is driven to travel, the electric power is supplied from the power generator to the traveling motor 13 to rotate the rotation shaft 14.

The rotation of the rotation shaft 14 is decelerated and transmitted from the sun gear 23 in the first-stage planetary gear reduction mechanism 22 to the planetary gear 24. The rotation of the planetary gear 24 is decelerated and transmitted through the internal gear 25 and the coupling 28 to the sun gear 30 in the second-stage planetary gear reduction mechanism 29. The rotation of the sun gear 30 is transmitted to the planetary gear 31 in second-stage planetary gear reduction mechanism 29. At this time, the cylindrical projection part 33A in the carrier 33 supporting the planetary gear 31 is spline-coupled to the small-diameter cylindrical part 12C of the spindle 12. Therefore, the revolving movement of the planetary gear 31 (rotation of the carrier 33) is restrained.

Accordingly, the planetary gear 31 rotates only on its axis around the sun gear 30 and the rotation decelerated by the rotation of the planetary gear 31 is transmitted to the internal gear 32 fixed to the wheel mounting cylinder 18. Therefore, the wheel mounting cylinder 18 is decelerated by two stages by the first-stage planetary reduction mechanism 22 and the second-stage planetary reduction mechanism 29 and rotates with a large rotational torque. As a result, the left and right rear wheels 7 as drive wheels rotate integrally with the wheel mounting cylinder 18, making it possible to cause the dump truck 1 to travel.

At the traveling of the dump truck 1, the lubricating oil L stored in the inner peripheral side of the wheel mounting cylinder 18 is stirred up by the planetary gears 24, 31 configuring the planetary gear reduction mechanisms 22, 29, and the like, which is supplied to engaging parts between gears, the first and second bearings 16, 17 and the like. Because of this, the planetary gear reduction mechanisms 22, 29, the first and second bearings 16, 17 and the like are lubricated and cooled as needed.

Here, a large weight acts on the first and second bearings 16, 17 supporting the wheel mounting cylinder 18 from the dump truck 1 loaded with cargo to raise the temperature of each of the first and second bearings 16, 17. Therefore, at the working of the dump truck 1 the temperature of each of the first and second bearings 16, 17 is always detected by the first and second temperature sensors 42, 43 and the control unit 44 monitors presence/absence of abnormality of each of the first and second bearings 16, 17 according to the detected temperature. In a case where the temperature of at least one of the first and second bearings 16, 17 exceeds the preset threshold value, the control unit 44 displays the abnormality information in regard to the first and second bearings 16, 17 on the display monitor 48 to be informed to an operator.

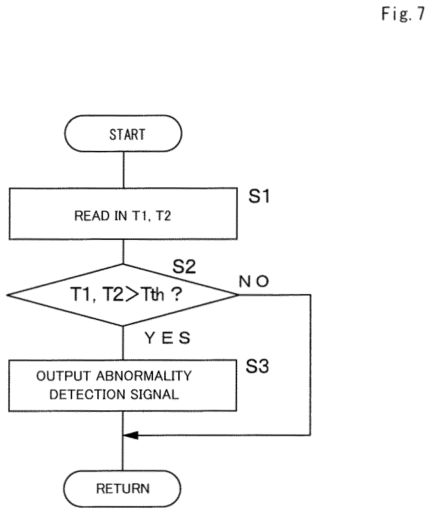

Next, an explanation will be made of the control processing to be executed by the control unit 44 by referring to Fig. 7 for detecting the abnormality of each of the first and second bearings 16, 17. This control processing starts based upon an operation of the startup switch (not shown) of the dump truck 1, for example. The control unit 44 reads in temperature T1 of the first bearing 16 detected by the first temperature sensor 42 and temperature T2 of the second bearing 17 detected by the second temperature sensor 43 at step S1 and thereafter, goes to step S2.

In this case, the first temperature sensor 42 is attached to the inner peripheral surface, which corresponds to the attachment section 12J to the first bearing 16, of the small-diameter cylindrical part 12C in the spindle 12. Accordingly, the heat generated by the first bearing 16 is transmitted via the attachment section 12J of the spindle 12 to the first temperature sensor 42. Therefore, even in a case where a temperature sensor directly abutting on the first bearing 16 cannot be provided, the temperature of the first bearing 16 can accurately be detected. Similarly, the second temperature sensor 43 is attached to the inner peripheral surface, which corresponds to the attachment section 12K to the second bearing 17, of the small-diameter cylindrical part 12C in the spindle 12. Accordingly, the heat generated by the second bearing 17 is transmitted via the attachment section 12K of the spindle 12 to the second temperature sensor 43. Therefore, the temperature of the first bearing 17 can accurately be detected without using a temperature sensor directly abutting on the second bearing 17.

At step S2, the control unit 44 (abnormality determining unit 45) determines whether or not temperature T1 of the first bearing 16 and temperature T2 of the second bearing 17 are larger (higher) than a preset threshold value Tth (T1 > Tth and T2 > Tth) . In a case where at step S2, "NO" is determined, the control unit 44 returns back to step S1. In a case where at step S2, "YES" is determined, that is, in a case where at least one of temperature T1 of the first bearing 16 and temperature T2 of the second bearing 17 is larger (higher) than the threshold value Tth, the control unit 44 goes to step S3.

At step S3, the control unit 44 (abnormality determining unit 45) outputs to the vehicle body controlling unit 46 an abnormality detection signal indicating that at least the one of temperature T1 of the first bearing 16 and temperature T2 of the second bearing 17 exceeds the threshold value Tth. Based thereupon, the control unit 44 (vehicle body controlling unit 46) outputs the abnormality information via the transmission unit 47 to the display monitor 48 located in the cab 5. The display monitor 48 performs the abnormality display as shown in Fig. 6 and informs the operator steering the dump truck 1 that the abnormality occurs in at least one of the first bearing 16 and the second bearing 17.

The operator that has confirmed the abnormality display of the display monitor 48 lowers the traveling speed of the dump truck 1, for example, to execute a cooling drive. As a result, the temperature rise of the first and second bearings 16, 17 can be suppressed to protect the first and second bearings 16, 17 while working the dump truck 1. Accordingly, the working time of the dump truck 1 can be suppressed from reducing due to the damage or the like of the first and second bearings 16, 17 to improve durability and reliability to long-hour working of the dump truck 1. In this case, by setting the threshold value Tth to a low temperature, the temperature rise of the first and second bearings 16, 17 can be informed to the operator at an early stage. Because of this, measures for suppressing the temperature rise of the first and second bearings 16, 17 can be taken early to extend a lifespan of the first and second bearings 16, 17.

In this way, in a case where the controlling unit 44 determines that at least the one of temperature T1 of the first bearing 16 and temperature T2 of the second bearing 17 is larger than the threshold value Tth, the abnormality display regarding the first and second bearings 16, 17 is made by the display monitor 48 to rouse attention to the operator. Thereafter, the control unit 44 returns back to step S1 and the control processing at step S1 and after step S1 repeats.

In this way, the dump truck 1 according to the embodiment comprises: the vehicle body 2 and the wheels (the front wheel 6 and the rear wheel 7); the cylindrical spindle 12 that is fixed to the vehicle body 2; the first and second bearings 16, 17 that are attached on the outer peripheral surface of the spindle 12 and rotatably support the wheel mounting cylinder 18, on which the rear wheel 7 is mounted, relative to the spindle 12; the rotation shaft 14 that is provided in the inner peripheral side of the spindle 12 to transmit the rotation of the traveling motor 13 through the gear reduction mechanism 21 to the wheel mounting cylinder 18; the first and second temperature sensors 42, 43 for detecting the temperature of each of the first and second bearings 16, 17; and the control unit 44 configured to determine the abnormality of each of the first and second bearings 16, 17 based upon the temperature detected by each of the first and second temperature sensors 42, 43. In addition, the first and second temperature sensors 42, 43 are arranged in the inner peripheral side of the spindle 12.

According to this configuration, the heat from the first and second bearings 16, 17 attached to the outer peripheral surface of the spindle 12 is transmitted to the inner peripheral side from the outer peripheral surface of the spindle 12. Therefore, even in a case where the temperature sensor cannot be provided in such a manner to abut on the first and second bearings 16, 17, the temperature of each of the first and second bearings 16, 17 can accurately be detected by each of the first and second temperature sensors 42, 43 arranged in the inner peripheral side of the spindle 12. As a result, the control unit 44 can accurately determine the abnormality of each of the first and second bearings 16, 17 based upon the temperature detected by each of the first and second temperature sensors 42, 43.

In the embodiment, the lubricating oil L for lubricating the gear reduction mechanism 21 is stored in the inner peripheral side of the wheel mounting cylinder 18, and the liquid surface of the lubricating oil L is located closer to the lower side than the axis center A-A of the rotation shaft 14 and the first and second temperature sensors 42, 43 are arranged closer to the upper side than the axis center A-A of the rotation shaft 14. According to this configuration, even when the temperature of the lubricating oil L rises due to lubricating the gear reduction mechanism 21, the first and second bearings 16, 17 and the like, the first and second temperature sensors 42, 43 can be prevented from being subject to the lubricating oil L. As a result, the temperature of each of the first and second bearings 16, 17 to be detected by each of the first and second temperature sensors 42, 43 can be suppressed from being detected mistakenly caused by the lubricating oil L to accurately detect the temperature of each of the first and second bearings 16, 17.

In the embodiment, the first temperature sensor 42 is attached to the inner peripheral surface, which corresponds to the attachment section 12J to the first bearing 16, of the spindle 12. The second temperature sensor 43 is attached to the inner peripheral surface, which corresponds to the attachment section 12K to the second bearing 17, of the spindle 12. According to this configuration, the heat generated by the first bearing 16 is transmitted via the attachment section 12J of the spindle 12 to the first temperature sensor 42 and the heat generated by the second bearing 17 is transmitted via the attachment section 12K of the spindle 12 to the second temperature sensor 43. As a result, even in a case where the temperature sensors directly abutting on the first and second bearings 16, 17 cannot be provided, the temperature of each of the first and second bearings 16, 17 can accurately be detected by using each of the first and second temperature sensor 42, 43.

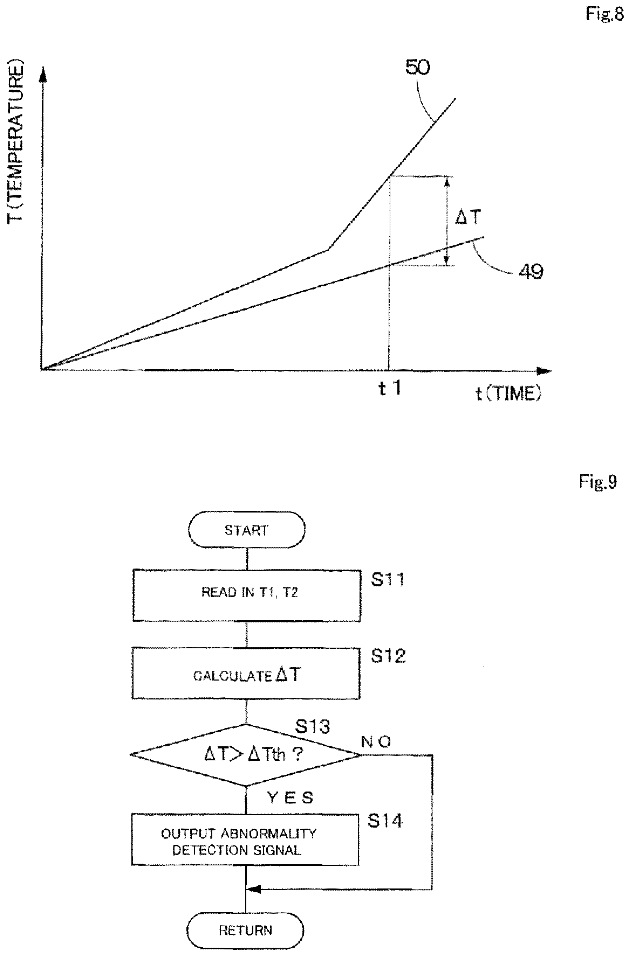

Next, Fig. 8 and Fig. 9 show a second embodiment of the present invention. The present embodiment is characterized in that a control unit detects abnormality of each of a first bearing and a second bearing based upon a temperature difference between a temperature detected by a first temperature sensor and a temperature detected by a second temperature sensor. It should be noted that in the present embodiment, components identical to those in the first embodiment are referred to as identical reference numbers and an explanation thereof is omitted.

The control unit 44 according to the present embodiment calculates a temperature difference ΔT between temperature T1 of the first bearing 16 detected by the first temperature sensor 42 and temperature T2 of the second bearing 17 detected by the second temperature sensor 43 by the abnormality determining unit 45. In addition, in a case where the calculated temperature difference ΔT is larger than a preset threshold value ΔTth of the temperature difference, the abnormality is determined to occur in the first bearing 16 or the second bearing 17.

The present embodiment has the configuration as described above, and as shown in Fig. 8, as the working time of the dump truck 1 increases, temperature T1 of the first bearing 16 as shown in a characteristic line 49 and temperature T2 of the second bearing 17 as shown in a characteristic line 50 rise together. Here, for example, in a case where the rotation of the second bearing 17 becomes slower than that of the first bearing 16 (in a case where abnormality occurs in the second bearing 17), temperature T2 of the second bearing 17 rapidly increases as compared to temperature T1 of the first bearing 16. Because of this, at a point of t1, the temperature difference ΔT between temperature T1 of the first bearing 16 and temperature T2 of the second bearing 17 becomes larger than the threshold value ΔTth of the temperature difference.

In this way, when the temperature difference ΔT between temperature T1 of the first bearing 16 and temperature T2 of the second bearing 17 becomes larger than the threshold value ΔTth of the temperature difference, the control unit 44 determines that the abnormality occurs in the first bearing 16 or the second bearing 17. The control unit 44 performs the abnormality display by the display monitor 48 (refer to Fig. 6) and informs the operator steering the dump truck 1 that the abnormality occurs in the first bearing 16 or the second bearing 17. As a result, the operator that has confirmed the abnormality display of the display monitor 48 lowers the traveling speed of the dump truck 1, for example, to execute the cooling drive. Therefore, the temperature rise of the first and second bearings 16, 17 can be suppressed.

Next, an explanation will be made of the control processing to be executed by the control unit 44 by referring to Fig. 9 for detecting the abnormality of each of the first and second bearings 16, 17 in the present embodiment. When the control processing starts, the control unit 44 reads in temperature T1 of the first bearing 16 detected by the first temperature sensor 42 and temperature T2 of the second bearing 17 detected by the second temperature sensor 43 at step S11 and thereafter, goes to step S12.

At step S12, the control unit 44 calculates a temperature difference ΔT between temperature T1 of the first bearing 16 and temperature T2 of the second bearing 17 and at subsequent step S13, determines whether or not the calculated temperature difference ΔT is larger than a preset threshold value ΔTth of the temperature difference (ΔT > ΔTth) . In a case where at step S13, "NO" is determined, the control unit 44 returns back to step S11. In a case where at step S13, "YES" is determined, that is, in a case where the temperature difference ΔT between temperature T1 of the first bearing 16 and temperature T2 of the second bearing 17 is determined to be larger than the threshold value ΔTth of the temperature difference, the control unit 44 goes to step S14.

At step S14, the control unit 44 outputs to the vehicle body controlling unit 46 an abnormality detection signal indicating that the temperature difference ΔT between temperature T1 of the first bearing 16 and temperature T2 of the second bearing 17 exceeds the threshold value ΔTth of the temperature difference. Because of this, the control unit 44 (vehicle body controlling unit 46) outputs the abnormality information via the transmission unit 47 to the display monitor 48 located in the cab 5. The display monitor 48 performs the abnormality display as shown in Fig. 6 and informs the operator steering the dump truck 1 that the abnormality occurs in the first bearing 16 or the second bearing 17. The control unit 44 executes step S14, thereafter, returns back to step S11 and the control processing at step S11 and after step S11 repeats.

It should be noted that at step S13, it is determined whether or not the temperature difference ΔT between temperature T1 of the first bearing 16 and temperature T2 of the second bearing 17 exceeds the preset threshold value ΔTth of the temperature difference (ΔT > ΔTth) and thereafter, for example, it may be determined whether or not the temperature T1 is larger than the temperature T2 (T1 > T2). Therefore, it can be determined in which one of the first bearing 16 and the second bearing 17 the abnormality occurs, thus clarifying a target of the maintenance.

In this way, also in the present embodiment, an operational effect similar to that in the first embodiment can be obtained. In this case, in the present embodiment, when the temperature difference ΔT between temperature T1 of the first bearing 16 and temperature T2 of the second bearing 17 exceeds the threshold value ΔTth of the temperature difference, the control unit 44 is configured to determine the abnormality of the first bearing 16 or the second bearing 17. Therefore, even in a state where the working time of the dump truck 1 is short and the temperature of each of the first bearing 16 and the second bearing 17 is relatively low, in a case where the abnormality occurs in one of the first bearing 16 and the second bearing 17 so that the temperature of the one abruptly rises, the temperature difference ΔT results in exceeding the threshold value ΔTth. Accordingly, it can early be determined by the control unit 44 that the abnormality occurs in one of the first bearing 16 and the second bearing 17. As a result, inspection, maintenance and the like to the first bearing 16 and the second bearing 17 can be performed early to prevent the failure of the first bearing 16 and the second bearing 17 and extend the lifespan thereof.

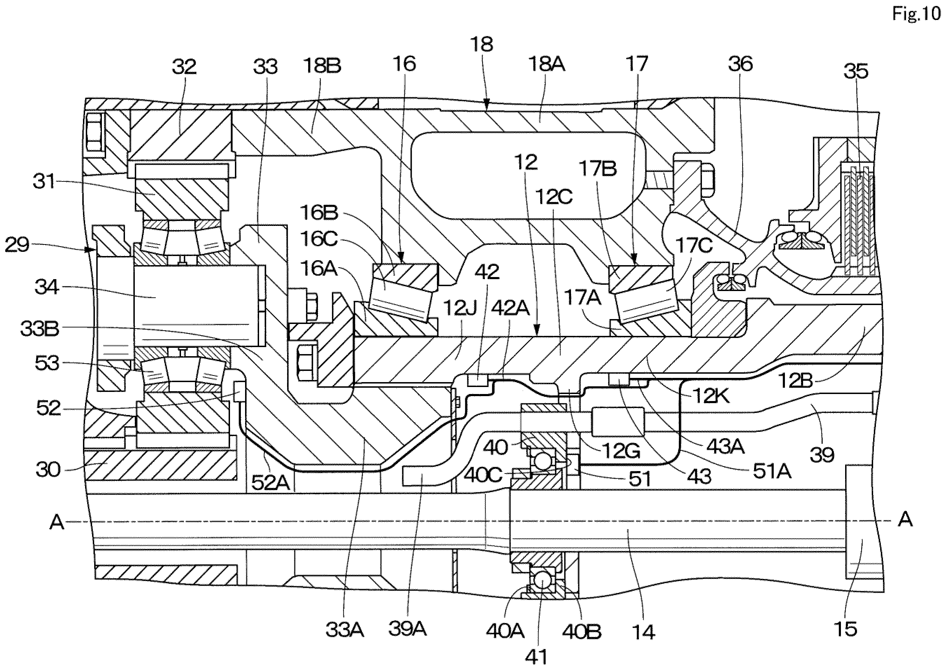

Next, Fig. 10 to Fig. 13 show a third embodiment of the present invention. The present embodiment is characterized in that the dump truck comprising a third temperature sensor for detecting a temperature of a third bearing and a fourth temperature sensor for detecting a temperature of a fourth bearing, wherein a control unit is configured to determine abnormality of each of the first, second, third and fourth bearings based upon the temperature detected by each of the first, second, third and fourth temperature sensors. It should be noted that in the present embodiment, components identical to those in the first embodiment are referred to as identical reference numbers and an explanation thereof is omitted.

A third temperature sensor 51 is attached to the retainer 40 for retaining a third bearing 41. The third temperature sensor 51 is attached to a sensor attachment surface 40C, which is a surface on an opposite side to the attachment surface to the third bearing 41, of the collar part 40B in the retainer 40 and detects a temperature of the third bearing 41. The third temperature sensor 51 is located closer to the upper side than the axis center A-A of the rotation shaft 14 to be not subject to the lubricating oil L. A cable 51A connected to the third temperature sensor 51 is led through the inner peripheral side of the spindle 12 to the outside of the axle housing 10 to be connected to the input side of the control unit 44.

A fourth temperature sensor 52 is attached to the second-stage carrier 33 configuring part of the second-stage planetary gear reduction mechanism 29. The plurality of planetary gears 31 configuring part of the second-stage planetary gear reduction mechanism 29 is rotatably supported via a fourth bearing 53 relative to a support pin 34 attached to the carrier 33. The fourth temperature sensor 52 is attached to a section, which is adjacent to an attachment section 33B to the fourth bearing 53, of the carrier 33 to detect a temperature of the fourth bearing 53. The fourth temperature sensor 52 is located closer to the upper side than the axis center A-A of the rotation shaft 14 to be not subject to the lubricating oil L. A cable 52A connected to the fourth temperature sensor 52 is led through the inner peripheral side of the cylindrical projection part 33A of the carrier 33 and the spindle 12 to the outside of the axle housing 10 to be connected to the input side of the control unit 44.

The control unit 44 always monitors the temperature of the first bearing 16 detected by the first temperature sensor 42, the temperature of the second bearing 17 detected by the second temperature sensor 43, the temperature of the third bearing 41 detected by the third temperature sensor 51 and the temperature of the fourth bearing 53 detected by the fourth temperature sensor 52, and the abnormality determining unit 45 determines the abnormality of each of the first, second, third and fourth bearings 16, 17, 41, 53. Specifically, in a case where a temperature of any one of the first, second, third and fourth bearings 16, 17, 41, 53 is larger than a preset threshold value and a temperature difference between the temperature of any one of the first, second, third and fourth bearings 16, 17, 41, 53 and an average value of temperatures of the other three bearings is larger than a preset threshold value of a temperature difference, the control unit 44 determines that the abnormality occurs in the above-mentioned one bearing. This determination is repeatedly made in order of the first, second, third and fourth bearings 16, 17, 41, 53 while the dump truck 1 is working.

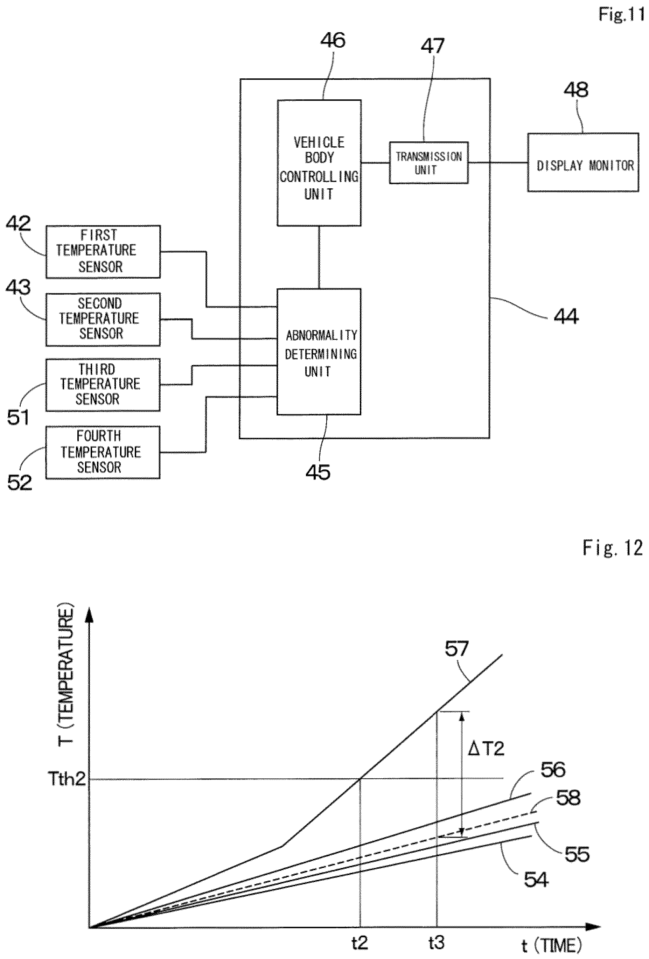

The present embodiment has the configuration as described above and next, an explanation will be made of a case where the control unit 44 makes the determination on abnormality of the fourth bearing 53. As shown in Fig. 12, as the working time of the dump truck 1 increases, temperature T1 of the first bearing 16 as shown in a characteristic line 54, temperature T2 of the second bearing 17 as shown in a characteristic line 55, temperature T3 of the third bearing 41 as shown in a characteristic line 56 and temperature T4 of the fourth bearing 53 as shown in a characteristic line 57 rise together. Here, for example, in a case where the rotation of the fourth bearing 53 becomes slower (in a case where abnormality occurs in the fourth bearing 53), temperature T4 of the fourth bearing 53 rapidly increases as compared to each of temperature T1, temperature T2 and temperature T3 of the first, second and third bearings 16, 17, 41.

The control unit 44 compares temperature T4 of the fourth bearing 53 with a preset threshold value Tth2 and calculates an average value Tave (characteristic line 58 in Fig. 12) of temperature T1, temperature T2 and temperature T3 of the first, second and third bearings 16, 17, 41 and compares a temperature difference ΔT2 between this average value Tave and temperature T4 of the fourth bearing 53 with a preset threshold value ΔTth2 of the temperature difference. In addition, the control unit 44 determines that the abnormality occurs in the fourth bearing 53 in a case where at a point of t2, temperature T4 of the fourth bearing 53 is larger than the threshold value Tth2, and at a point of t3, the temperature difference ΔT2 between the average value Tave of temperature T1, temperature T2 and temperature T3 and temperature T4 of the fourth bearing 53 is larger than the threshold value ΔTth2 of the temperature difference. Because of this, the control unit 44 performs the abnormality display by the display monitor 48 and informs the operator steering the dump truck 1 that the abnormality occurs in the fourth bearing 53.

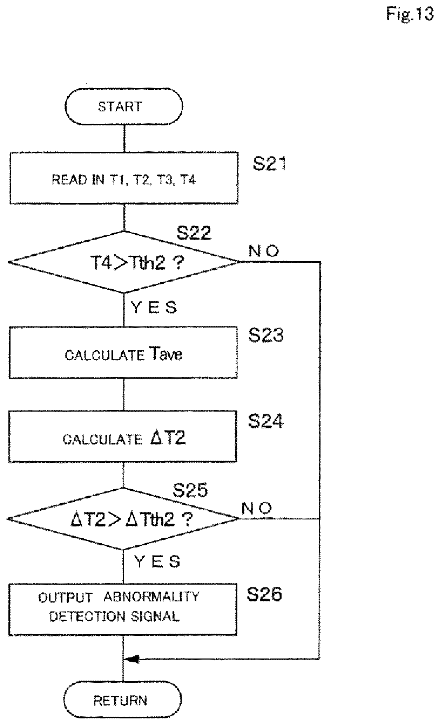

Next, an explanation will be made of the control processing to be executed by the control unit 44 by referring to Fig. 13 for detecting the abnormality of the fourth bearing 53 in the present embodiment. When the control processing starts, the control unit 44 reads in temperature T1 of the first bearing 16 detected by the first temperature sensor 42, temperature T2 of the second bearing 17 detected by the second temperature sensor 43, temperature T3 of the third bearing 41 detected by the third temperature sensor 51 and temperature T4 of the fourth bearing 53 detected by the fourth temperature sensor 52 at step S21 and thereafter, goes to step S22.

At step S22, the control unit 44 determines whether or not temperature T4 of the fourth bearing 53 is larger than the preset threshold value Tth2 (T4 > Tth2). In a case where at step S22, "NO" is determined, the control unit 44 returns back to step S21. In a case where at step S22, "YES" is determined, that is, in a case where temperature T4 of the fourth bearing 53 is larger than the threshold value Tth2, the control unit 44 goes to step S23. At step S23, the control unit 44 calculates the average value Tave of temperature T1, temperatureT2 and temperatureT3 of the first, second and third bearings 16, 17, 41 and thereafter, goes to step S24, wherein the control unit 44 calculates the temperature difference ΔT2 between the calculated average value Tave and temperature T4 of the fourth bearing 53.

At subsequent step S25, the control unit 44 determines whether or not the calculated temperature difference ΔT2 is larger than the preset threshold value ΔTth2 of the temperature difference (ΔT2 > ΔTth2). In a case where at step S25, "NO" is determined, the control unit 44 returns back to step S21. In a case where at step S25, "YES" is determined, that is, in a case where the temperature difference ΔT2 between the average value Tave of temperature T1, temperature T2 and temperature T3 and temperature T4 of the fourth bearing 53 is larger than the threshold value ΔTth2 of the temperature difference, the control unit 44 goes to step S26. In addition, the control unit 44 outputs the abnormality detection signal indicating that the abnormality occurs in the fourth bearing 53 to the vehicle body controlling unit 46. Because of this, the display monitor 48 performs the abnormality display as shown in Fig. 6 and informs the operator steering the dump truck 1 that the abnormality occurs in the fourth bearing 53. After the control unit 44 executes step S26, the control unit 44 returns back to step S21 and repeats the control processing at step S21 and after step S21.

In this way, the control unit 44 executes the control processing regarding the abnormality detection of the fourth bearing 53 and as similar to this, sequentially executes also the control processing for detecting the abnormality of each of the first, second and third bearings 16, 17, 41. Because of this, at the working of the dump truck 1, the control unit 44 always monitors the abnormality of each of the first, second, third and fourth bearings 16, 17, 41, 53 and when the abnormality occurs, the abnormality can immediately be informed to the operator by the display monitor 48.

In this way, also in the present embodiment, an operational effect similar to that in the first embodiment can be obtained. In this case, in the present embodiment the abnormality is determined to occur in the fourth bearing 53 in a case where temperature T4 of the fourth bearing 53 is larger than the threshold value Tth2 and the temperature difference ΔT2 between the average value Tave of temperature T1, temperature T2 and temperature T3 and temperature T4 of the fourth bearing 53 is larger than the threshold value ΔTth2 of the temperature difference. Therefore, for example, in a case where the temperature of the threshold value Tth2 is set to be low for finding out the abnormality of the bearing at an early stage, even when temperature T4 of the fourth bearing 53 is larger than the threshold value Tth2, if the temperature difference ΔT2 between the average value Tave of temperature T1, temperature T2 and temperature T3 and temperature T4 of the fourth bearing 53 is equal to or less than the threshold value ΔTth2 of the temperature difference, it can be determined that there is no state where temperature T4 of the fourth bearing 53 only rises especially. As a result, also in a case where the temperature of the threshold value Tth2 is set to be low, it is possible to enhance the accuracy of the abnormality determination to the fourth bearing 53.

It should be noted that in the embodiment, the dump truck 1 of a rear-wheel drive type is explained as an example. However, the present invention is not limited thereto, but the present invention may be applied to a dump truck of a front-wheel drive type or a four-wheel drive type driving front and rear wheels together.

### DESCRIPTION OF REFERENCE NUMERALS

- 1:: DUMP TRUCK
- 2:: VEHICLE BODY
- 7:: REAR WHEEL (WHEEL)
- 12:: SPINDLE
- 12J, 12K:: ATTACHMENT SECTION
- 13:: TRAVELING MOTOR (DRIVE SOURCE)
- 14:: ROTATION SHAFT
- 16:: FIRST BEARING
- 17:: SECOND BEARING
- 18:: WHEEL MOUNTING CYLINDER
- 21:: GEAR REDUCTION MECHANISM
- 31:: PLANETARY GEAR
- 33:: CARRIER
- 33B:: ATTACHMENT SECTION
- 40:: RETAINER (BEARING ATTACHING MEMBER)
- 41:: THIRD BEARING
- 42:: FIRST TEMPERATURE SENSOR
- 43:: SECOND TEMPERATURE SENSOR
- 44:: CONTROL UNIT
- 51:: THIRD TEMPERATURE SENSOR
- 52:: FOURTH TEMPERATURE SENSOR
- 53:: FOURTH BEARING

## Claims

1. a working vehicle comprising:
a vehicle body and wheels;
a cylindrical spindle that is fixed to the vehicle body;
a bearing that is attached on an outer peripheral surface of the spindle and rotatably supports a wheel mounting cylinder, on which the wheel is mounted, relative to the spindle;
a rotation shaft that is rotatably provided in an inner peripheral side of the spindle to transmit rotation of a power source through a gear reduction mechanism to the wheel mounting cylinder;
a temperature sensor for detecting a temperature of the bearing; and
a control unit configured to determine abnormality of the bearing based upon the temperature detected by the temperature sensor, **characterized in that**:
the temperature sensor is located in the inner peripheral side of the spindle.

2. The working vehicle according to claim **1,** wherein
lubricating oil for lubricating the gear reduction mechanism is stored in an inner peripheral side of the wheel mounting cylinder,
a liquid surface of the lubricating oil is located closer to the lower side than an axis center of the rotation shaft, and
the temperature sensor is located closer to the upper side than the axis center of the rotation shaft.

3. The working vehicle according to claim 1, wherein
the temperature sensor is attached to an inner peripheral surface, which corresponds to an attachment section to the bearing, of the spindle.

4. The working vehicle according to claim 3, wherein
the bearing includes a first bearing and a second bearing that are attached to be axially separated on the outer peripheral surface of the spindle,
the temperature sensor includes a first temperature sensor and a second temperature sensor that are attached on the inner peripheral surface, which corresponds to the attachment section to the first bearing and the second bearing, of the spindle, and
the control unit is configured to determine abnormality of each of the first bearing and the second bearing based upon a temperature difference between a temperature detected by the first temperature sensor and a temperature detected by the second temperature sensor.

5. The working vehicle according to claim 4, wherein
a bearing attaching member is provided in the inner peripheral side of the spindle;
the rotating shaft is rotatably supported by a third bearing attached on the bearing attaching member, and
a third temperature sensor for detecting a temperature of the third bearing is attached to the surface opposite side to the mounting surface of the third bearing on the bearing attaching member.

6. The working vehicle according to claim 5, wherein
the gear reduction mechanism includes:
a carrier that is spline-coupled to the spindle;
a fourth bearing that is attached to the carrier; and
a planetary gear that is rotatably supported by the fourth bearing, further comprising:
a fourth temperature sensor that is attached to a section, which is adjacent to an attachment section to the fourth bearing, of the carrier to detect a temperature of the fourth bearing, wherein
the control unit is configured to determine abnormality of each of the first, second, third and fourth bearings based upon the temperature detected by each of the first, second, third and fourth temperature sensors.
